# EUROPEAN PATENT APPLICATION

(11) **EP 4 527 539 A1**
(43) Date of publication of application: **26.03.2025**
(21) Application number: 24196638.1
(22) Date of filing: 27.08.2024
(51) Int. Cl.: B23K 26/03, B23K 26/0622, B23K 26/382, B23K 101/00

(54) **SYSTEM AND METHOD FOR DETECTING LASER HOLE DRILLING BREAKTHROUGH**

(30) Priority: 21.09.2023 US 202318471496
(71) Applicant: General Electric Technology GmbH, 5400 Baden (CH)
(72) Inventor: WOOLRIDGE, Jillian Jamison, Greenville, 29615 (US); LOMAS, Jonathan, Greenville, 29615 (US); SIMPSON, Stanley F., Greenville, 29615 (US)
(74) Representative: Freigutpartners IP Law Firm

(57) **Abstract**

A detection system for use with a component is provided. The component includes a plurality of cooling holes located on an outer surface of the component and an air supply system coupled in flow communication to a back surface of each of the plurality of cooling holes. The detection system includes a data acquisition system including at least one sensor and a processor. The processor is configured to cause a laser device to drill a first of the cooling holes, detect an air change in air proximate the first cooling hole from the air supply system based on data received from the at least one sensor, wherein the air change is indicative of a drilling breakthrough of the back surface of the first cooling hole, and operate the laser device to stop drilling the first cooling hole based on the detected air change.

## Description

### BACKGROUND

The present disclosure relates generally to laser hole drilling breakthrough detection systems and methods, and, more specifically, to systems and methods for use in detecting breakthrough of a laser through an outer surface of a component when drilling cooling holes in the component.

Turbine engines, such as gas turbine engines or steam turbine engines, are widely used in industrial and power generation operations. During operation, turbine engine components are subj ected to prolonged high temperatures. To facilitate cooling the components and to facilitate reducing damage from the prolonged exposure to high temperatures, at least some known turbine engine components include cooling holes that enable cooling air to be circulated through and around at least a portion of the component.

Typically, the cooling holes are drilled into an outer surface of the turbine engine component using a laser. However, without appropriate breakthrough detection methods in place, the laser may undesirably drill too deeply and potentially cause damage to features beneath the outer surface of the component. Accordingly, there exists a need for systems and methods that may be used for detecting laser hole drilling breakthrough of cooling holes on the outer surface of components to facilitate improving the efficiency of cooling hole drilling and to facilitate reducing drilling damage to component features beneath the outer surface of the component.

### BRIEF DESCRIPTION

In one aspect, a detection system for use with a component is provided. The component includes a plurality of cooling holes located on an outer surface of the component and an air supply system coupled in flow communication to a back surface of each of the plurality of cooling holes. The detection system includes a data acquisition system configured to examine the plurality of cooling holes, the data acquisition system including at least one sensor, and a processor in operable communication with the data acquisition system. The processor is configured to cause a laser device to drill a first of the cooling holes into the outer surface of the component, wherein the laser device emits a number of laser beam pulses during operation. The processor is also configured to detect an air change in air proximate the first cooling hole from the air supply system based on data received from the at least one sensor, wherein the air change is indicative of a drilling breakthrough of the back surface of the first cooling hole, and operate the laser device to stop drilling the first cooling hole based on the detected air change.

In another aspect, a method of detecting breakthrough of laser drilling through a back surface of at least one cooling hole located on an outer surface of a component is provided. The method includes operating a laser device to drill the at least one cooling hole into the outer surface of the component, wherein the laser device emits a number of laser beam pulses during operation. The method also includes detecting, by at least one sensor, an air change in air proximate the at least one cooling hole from the air supply system based on data received from the at least one sensor, wherein the air change is indicative of a drilling breakthrough of the back surface of the at least one cooling hole, and operating the laser device to stop drilling the at least one cooling hole based on the detected air change.

### BRIEF DESCRIPTION OF THE DRAWINGS

FIG. 1 is a schematic illustration of a turbine engine component.
FIG. 2 is a schematic front view of the turbine engine component of FIG. 1.
FIG. 3 is a schematic side cross-sectional view of the turbine engine component of FIG. 1.
FIG. 4 is a schematic of an exemplary detection system for use in analyzing the turbine engine component of FIG. 1.
FIGS. 5A and 5B are schematic side cross-sectional views of a laser light beam and the turbine engine component of FIG. 1.
FIG. 6 is another schematic side cross-sectional view of the turbine engine component of FIG. 5A.
FIG. 7 is a flowchart illustrating an exemplary method for analyzing a turbine engine component.

### DETAILED DESCRIPTION

The embodiments described herein relate to systems and methods for use in detecting breakthrough of a laser through an outer surface of a component when drilling cooling holes in the component to facilitate improving the efficiency of cooling hole drilling and to facilitate reducing laser drilling damage to component features beneath the outer surface of the component.

The systems and methods described herein facilitate the detection of laser drilling breakthrough through a back surface of a cooling hole drilled into an outer surface of a component. The advantages of the systems and methods described herein include, at least: (i) improved efficiency of cooling hole laser drilling due to sensing of laser drilling breakthrough through a back surface of the cooling hole; (ii) improved accuracy and cost-effectiveness of laser drilling breakthrough due to the measurement of air pressure, air flow, and/or air temperature within and/or proximate to the cooling hole; and (iii) improved protection of component features underlying the outer surface of the turbine engine component proximate the cooling hole.

When introducing elements of various embodiments disclosed herein, the articles "a," "an," "the," and "said" are intended to mean that there are one or more of the elements. The terms "comprising," "including," and "having" are intended to be inclusive and mean that there may be additional elements other than the listed elements.

Unless otherwise indicated, approximating language, such as "generally," "substantially," and "about," as used herein indicates that the term so modified may apply to only an approximate degree, as would be recognized by one of ordinary skill in the art, rather than to an absolute or perfect degree. Accordingly, a value modified by a term or terms such as "about," "approximately," and "substantially" is not to be limited to the precise value specified. In at least some instances, the approximating language may correspond to the precision of an instrument for measuring the value. Additionally, unless otherwise indicated, the terms "first," "second," etc. are used herein merely as labels, and are not intended to impose ordinal, positional, or hierarchical requirements on the items to which these terms refer. Moreover, reference to, for example, a "second" item does not require or preclude the existence of, for example, a "first" or lower-numbered item or a "third" or higher-numbered item.

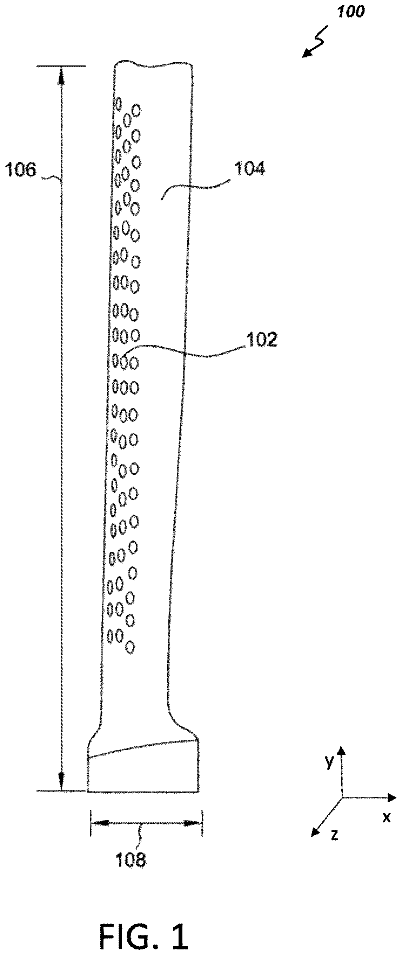

FIG. 1 is a schematic illustration of a turbine engine component 100. The component 100 may be any of a variety of component types used in a variety of turbine engine applications, such as, for example, components utilized in high temperature applications. In some embodiments, the component 100 may be a turbine blade, a compressor blade, a vane, a nozzle, a shroud, a rotor, a transition piece, and/or a rotor casing. In other embodiments, the component 100 may be any other component of a turbine engine. In the exemplary embodiment, the component 100 includes a plurality of cooling holes 102 formed therein. The cooling holes 102 may facilitate improved air circulation around and/or within the component 100 during operation of the turbine engine. In the exemplary embodiment, the component 100 includes an outer surface 104 on which the cooling holes 102 are spaced.

In the exemplary embodiment, the component 100 has a length 106 and a width 108. In the following description, the component 100 may be described as extending "vertically," or along a vertical Y direction, or "horizontally," or along a horizontal X-Z plane. It should be understood that these phrases are descriptive and should not be construed in an overly limiting manner. In the embodiment of FIG. 1, the length 106 extends vertically along the vertical Y direction and the width 108 extends horizontally along the horizontal X-Z plane. The measurements of the length 106 and the width 108 may vary and the component 100 should not be construed as being limited to the illustrated shape (as shown in FIG. 1) formed by the length 106 and the width 108.

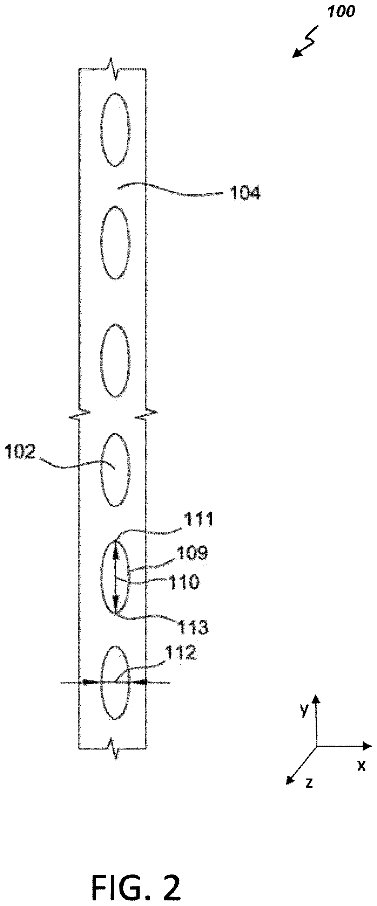

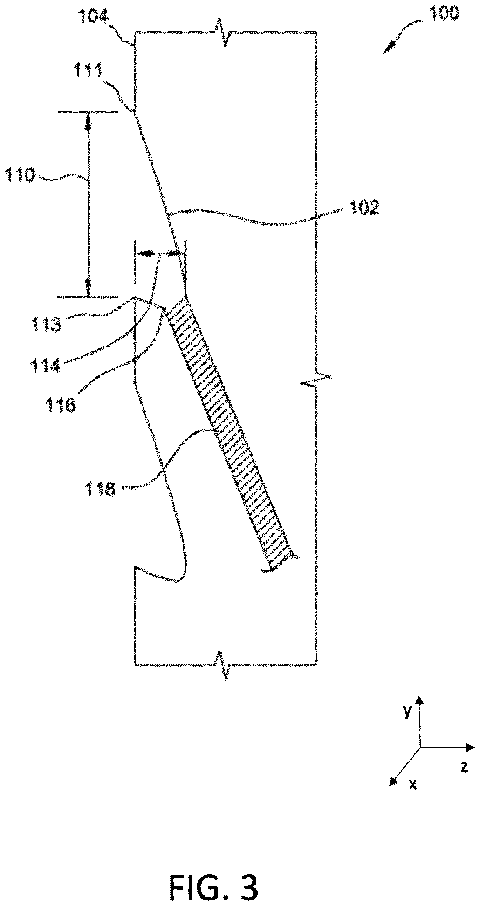

FIGs. 2 and 3 are schematic illustrations of cooling holes 102 formed in the component 100. More specifically, FIG. 2 illustrates a front view of the component 100 and FIG. 3 illustrates a side cross-sectional view of the component 100. The cooling holes 102 may have any surface shape and any exit shape that facilitates the systems and methods described herein. For example, the cooling holes 102 may have an elliptical shape on the outer surface 104 when viewed from the front, as shown in FIG. 2. For all shapes, each cooling hole 102 is defined by a pair of sides 109, a top end 111, and a bottom end 113. As shown in FIG. 2, the sides 109 extend along a surface height 110 of the cooling holes 102, with the surface height 110 being defined between a vertex/middle of each of the top end 111 and the bottom end 113. Additionally, as shown in FIG. 2, the top end 111 and the bottom end 113 each extend along a surface width 112 of the cooling holes 102, with the surface width 112 defined between a vertex/middle of each side 109. The sides 109, the top end 111, and the bottom end 113 are all coupled together to form the shape of the cooling holes 102. Although the cooling holes 102 are illustrated as circular in the Figures, this is meant to be illustrative only and is not intended to be limiting. In the exemplary embodiment, as best seen in FIGs. 1 and 2, the surface height 110 extends vertically along the length 106 (e.g., along the vertical Y direction) and the surface width 112 extends horizontally along the width 108 (e.g., along the horizontal X-Z plane).

As shown in FIG. 3, each cooling hole 102 extends into the component 100 from the outer surface 104 to a depth 114 that varies across the surface height 110. In the exemplary embodiment, the cooling holes 102 are formed shallowest at the top end 111, with the depth 114 being at a minimum, and deepest at or below the bottom end 113, with the depth 114 increasing across the surface height 110 from the top end 111 to the bottom end 113. In the exemplary embodiment, the depth 114 is deepest at a dip point 116 formed below the bottom end 113 (e.g., beneath the bottom end 113 in the vertical Y direction), at which point the cooling holes 102 are coupled in flow communication with a channel 118 of an air supply system (not shown in the Figures) of the component 100.

The air supply system may be any system to provide air to the cooling holes 102 and/or the channels 118 of the component 100 as described herein. For example, the air supply system may be a supply of air from a shop supply that is configured to flow air through the channels 118 of the component 100. Additionally, for example, the air may be cooled prior to proximity to the component 100, such as by an individual chiller.

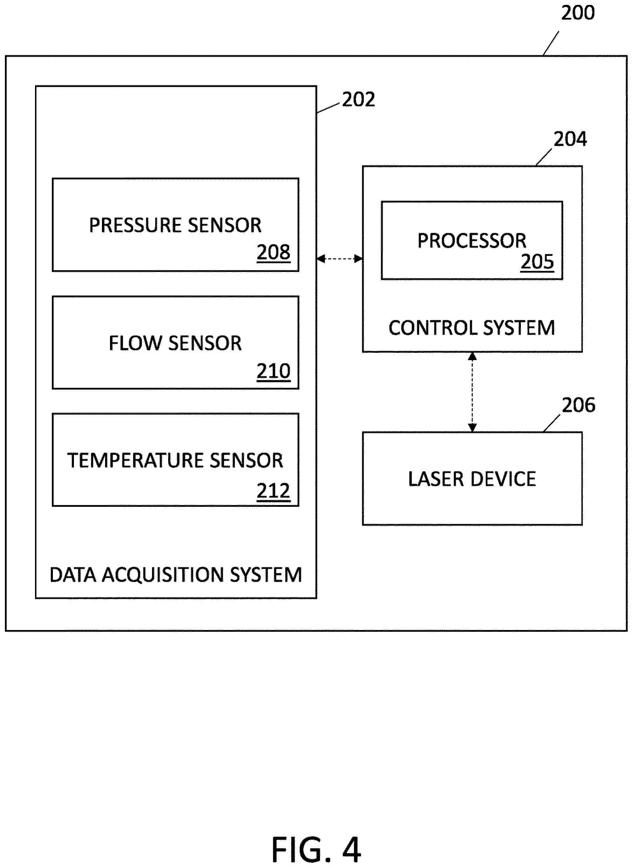

FIG. 4 is a schematic diagram of an exemplary detection system 200 that may be used to detect breakthrough of a back surface of the cooling holes 102 drilled into the outer surface 104 of the component 100 using a laser. In the exemplary embodiment, detection system 200 includes a data acquisition system 202 and a control system 204. The control system 204 includes a processor 205 that analyzes data acquired by the data acquisition system 202. In the exemplary embodiment, the cooling holes 102 are drilled into the outer surface 104 of the component 100 using a laser device 206. The control system 204 uses the data analyzed by the processor 205 to control the operation of the laser device 206 to emit pulses of laser light across the outer surface 104 of the component 100.

The data acquisition system 202 may include a pressure sensor 208 that measures air pressure at an opening of the cooling hole 102 proximate the outer surface 104 of the component 100. The data acquisition system 202 may also include a flow sensor 210 that measures air flow through the cooling hole 102 and/or a temperature sensor 212 that measures a temperature of the outer surface 104 of the component 100 proximate the cooling hole 102. Thus, the data acquisition system 202 may communicate with the control system 204 and the laser device 206 to facilitate accurate and efficient operation of the laser device 206 when drilling the cooling holes 102 into the outer surface 104 of the component 100, based on the received sensor data, such as from the pressure sensor 208, the flow sensor 210, and/or the temperature sensor 212.

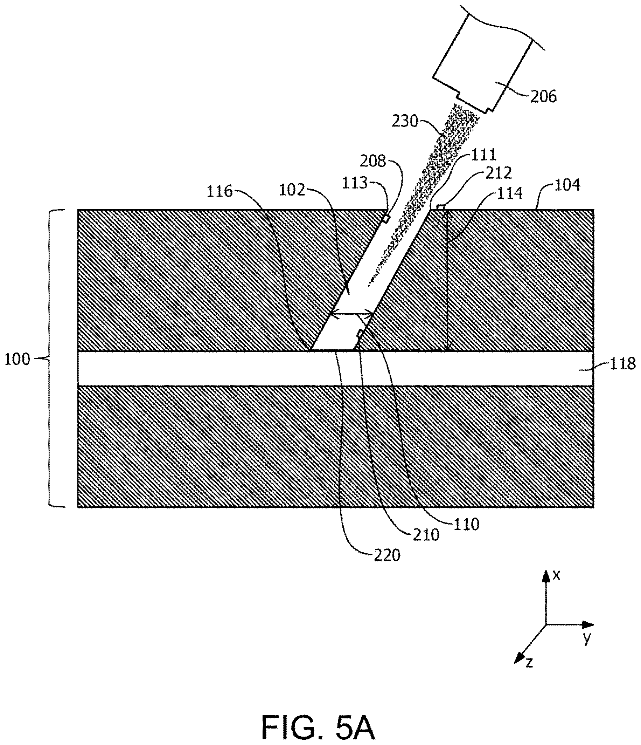

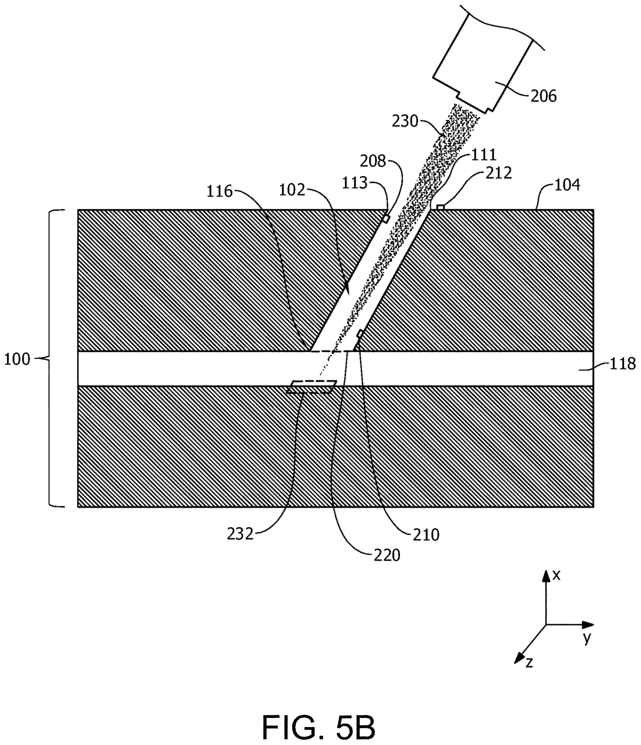

FIGS. 5A and 5B are schematic illustrations of a side cross-sectional view of the laser device 206 emitting a laser light beam 230 across the outer surface 104 of the component 100 to enable the cooling hole 102 to be drilled. In the exemplary embodiment of FIG. 5A, the laser device 206 is controlled by the control system 204 (shown in FIG. 4) such that the laser light beam 230 stops after drilling through a back surface 220 of the cooling hole 102 (e.g., past the dip point 116). In the absence of a control system, such as, but not limited to, the control system 204 (shown in FIG. 4), the laser device 206 may drill through the back surface 220 of the cooling hole 102 and undesirably damage a component area 232 of the component 100 proximate the dip point 116 of the cooling hole 102, as shown in FIG. 5B.

The pressure sensor 208, the flow sensor 210, and/or the temperature sensor 212 may collect data that is used by the control system 204 (shown in FIG. 4) to facilitate control of the operation of the laser device 206. In the exemplary embodiment, air is pushed or drawn through the channel 118 of the cooling air channel system of the component 100 and sensors (such as, but not limited to, the pressure sensor 208, the flow sensor 210, and/or the temperature sensor 212) are used to measure characteristics of the air flowing through and/or proximate to the component 100. The sensors, including the pressure sensor 208, the flow sensor 210, and/or the temperature sensor 212, may be positioned in any location proximate the cooling holes 102 that facilitates the collection of data for the systems and methods described herein. Thus, the positions of the pressure sensor 208, the flow sensor 210, and/or the temperature sensor 212 in the Figures is meant to be illustrative only, and is not intended to be limiting.

The data collected by the pressure sensor 208, the flow sensor 210, and/or the temperature sensor 212 may be indicative of a change in the measured characteristic of the air flowing through and/or proximate to the component 100. In some embodiments, the data collected may be analyzed for a statistically significant change in pressure, flow, and/or temperature. In other embodiments, the data collected may be analyzed for any change in pressure, flow, and/or temperature, facilitating an increase in speed of data collection when measured changes are not required to be statistically significant. For example, a change in pressure, flow, and/or temperature that is not statistically significant but is still collected may be relative to a first derivative of the measured sensor (the pressure sensor 208, the flow sensor 210, and/or the temperature sensor 212), including an analysis of a difference between the measured value and an expected first derivative of the measured sensor.

The pressure sensor 208 may measure air pressure through the cooling hole 102. In some embodiments, as illustrated in FIGS. 5A-5B, the pressure sensor 208 may be positioned within the cooling hole 102 proximate an entrance to the cooling hole 102 (e.g., proximate the outer surface 104 of the component 100). In other embodiments, the pressure sensor 208 may be positioned elsewhere, such as, but not limited to, within the channel 118 proximate the dip point 116 of the cooling hole 102. In the exemplary embodiment, the air pressure measured by the pressure sensor 208 is analyzed by the processor 205 (shown in FIG. 4) to detect when the laser light beam 230 breaks through the back surface 220 of the cooling hole 102 (shown by a dashed line in FIG. 5B). For example, the pressure sensor 208 may measure an increase in air pressure to detect an increase in the amount of air flowing through the cooling hole 102 from the channel, such as occurs when the cooling hole 102 is extended through the back surface 220 by the laser light beam 230. For example, the increase in air pressure may be relative to an atmospheric pressure (e.g., the pressure of air surrounding the component 100) and/or a preset pressure value, such as, but not limited to, between 14 PSIG and 40 PSIG, relative to 90 PSIG, and/or relative to 120 PSIG.

The flow sensor 210 may measure air flow stability within the cooling hole 102. In some embodiments, as illustrated in FIGS. 5A-5B, the flow sensor 210 may be positioned within the cooling hole 102 proximate the dip point 116 of the cooling hole 102. In other embodiments, the flow sensor 210 may be positioned elsewhere. In the exemplary embodiment, the air flow stability measured by the flow sensor 210 is analyzed by the processor 205 (shown in FIG. 4) to detect when the laser light beam 230 breaks through the back surface 220 of the cooling hole 102 (shown by a dashed line in FIG. 5B). For example, the flow sensor 210 may detect an unstable air flow, such as an increase in, and/or a change of direction of, the flow of air through the cooling hole 102 from the channel 118, such as occurs when the cooling hole 102 is opened through the back surface 220 by the laser light beam 230.

The temperature sensor 212 may measure the temperature of the outer surface 104 of the component 100 proximate the entrance to the cooling hole 102. In some embodiments, as illustrated in FIGS. 5A-5B, the temperature sensor 212 may be positioned on the outer surface 104 proximate the entrance to the cooling hole 102 (e.g., proximate the top end 111 and/or the bottom end 113 of the cooling hole 102 on the outer surface 104). In other embodiments, the temperature sensor 212 may be positioned elsewhere. In the exemplary embodiment, the temperature measured by the temperature sensor 212 is analyzed by the processor 205 (shown in FIG. 4) to detect when the laser light beam 230 breaks through the back surface 220 of the cooling hole 102 (shown by a dashed line in FIG. 5B).

For example, the temperature sensor 212 may detect a change in the temperature of the outer surface 104 of the component 100 proximate the entrance to the cooling hole 102 when the cooling hole 102 is opened through the back surface 220 by the laser light beam 230. In such situations, as the cooling hole is opened through the back surface 220 by the laser light beam 230, the temperature at the outer surface 104 may change as air flows through the cooling hole 102 into the channel 118. In some embodiments, the temperature sensor 212 may be a thermistor. In other embodiments, the temperature sensor 212 may be a thermocouple. Alternatively, any other temperature detection device may be used that enables the detection system 200 to function as described herein. The change in the temperature of the outer surface 104 of the component 100 may be a change relative to an ambient temperature (e.g., the ambient air temperature proximate the component 100) and/or relative to a temperature of the component 100 (e.g., the temperature of the component 100 not only at the outer surface 104).

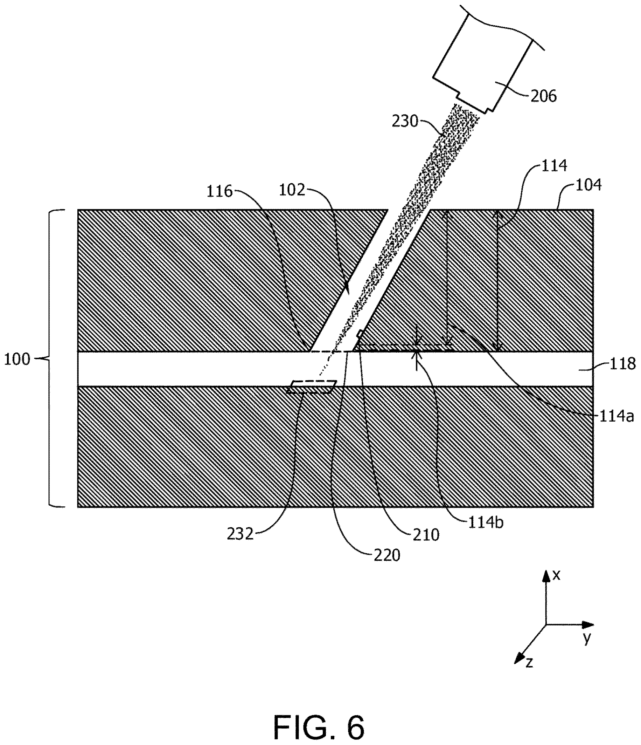

FIG. 6 is another schematic side cross-sectional view of the laser device 206 emitting the laser light beam 230 across the outer surface 104 of the component 100. As previously described, the laser device 206 emits the laser light beam 230 in pulses to enable the cooling hole 102 to be drilled. Thus, to enable data collected by the pressure sensor 208, the flow sensor 210, and/or the temperature sensor 212 to be used by the control system 204 (shown in FIG. 4) to control the operation of the laser device 206, the sensor data must be collected at a sensor measurement rate that is faster than a laser light pulse rate of the laser device 206. The laser light pulse rate may also be dependent on the sensor measurement rate. For example, the laser light pulse rate may be decreased to drill at a rate slower than the sensor measurement rate to facilitate improved accuracy of breakthrough detection.

In the exemplary embodiment, the laser light pulse rate may be dependent on the drilling depth of the laser light beam 230 as the cooling hole 102 is drilled. For example, as shown in FIG. 6, the depth 114 of the cooling hole 102 may have a first depth 114a extending from the outer surface 104 of the component 100 into the cooling hole 102, and a second depth 114b underlying the first depth 114a, the depth 114 being a total depth that is the sum of the first depth 114a and the second depth 114b. The laser light pulse rate may vary between the first depth 114a and the second depth 114b.

In the exemplary embodiment, the laser light pulse rate within the first depth 114a is higher than the laser light pulse rate within the second depth 114b. That is, the pulse rate of the laser light beam 230 may be faster within the first depth 114a than the pulse rate of the laser light beam 230 within the second depth 114b (e.g., the time between laser light pulses t_{d} may be greater within the second depth 114b), to facilitate reducing the laser light pulses of the laser device 206 proximate the back surface 220 of the cooling hole 102. The pulse rate of the laser light beam 230 within the second depth 114b may be slower than the sensor measurement rate at which the sensor data is collected.

The first depth 114a and/or the second depth 114b may be determined by the processor 205 of the control system 204 (shown in FIG. 4) based on previously drilled cooling holes 102 of the component 100. For example, the processor 205 may calculate an average number of laser light pulses to breakthrough the back surface 220 of the cooling holes 102 of the component 100 (e.g., a threshold number of pulses) after a number of cooling holes 102 are drilled. Based on this threshold number of pulses, the processor 205 may determine the first depth 114a to be within a certain number of pulses of the threshold number of pulses. In some embodiments, the threshold number of pulses may additionally be based on a material(s) and/or a thickness of the component as measured from the outer surface 104 of the component 100 to the channel 118 of the air supply system of the component 100.

The threshold number of pulses may vary across the component 100, in that areas of the component 100 may be of a different material and/or a greater thickness as measured from the outer surface 104 of the component 100 to the channel 118 of the air supply system of the component 100, such that a greater number of laser light pulses is needed to breakthrough the back surface 220 of the cooling holes 102 in those areas. In other embodiments, the threshold number of pulses may also be based on a pulse power of the laser device 206. The pulse power of the laser device 206 may be variably selected by reducing the power of the laser device 206 and/or defocusing the laser light beam 230.

In some embodiments, the first depth 114a may be determined based on an assumed thickness of the component 100. For example, the component 100 may be designed to be of a set thickness, and the first depth 114a may be a depth up to 95% of the set thickness and/or a depth in a range of 80-95% of the set thickness. In other embodiments, the first depth 114a may be determined based on a statistical analysis of the threshold number of pulses of previously drilled cooling holes 102. For example, the first depth 114a may be a depth up to 95% of the depth as drilled by the threshold number of pulses and/or a depth in a range of 08-95% of the depth as drilled by the threshold number of pulses.

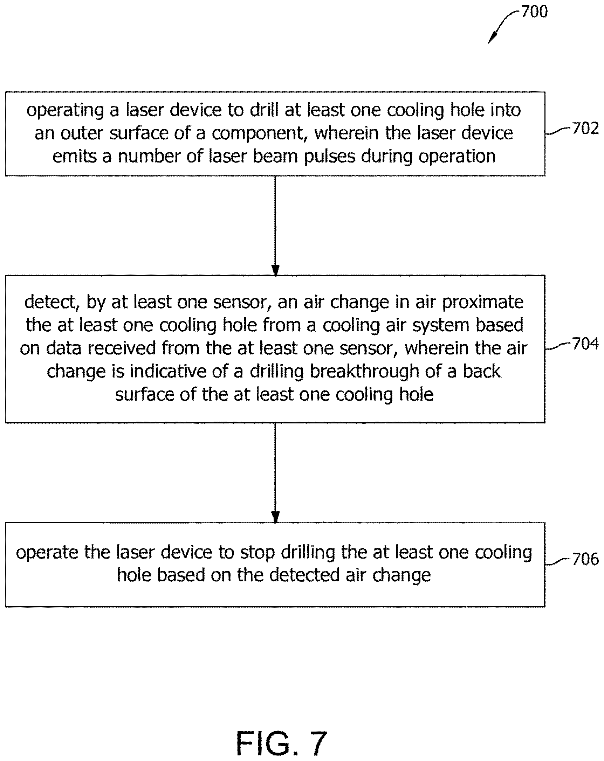

FIG. 7 is a flowchart illustrating an exemplary method 700 for analyzing a turbine engine component. In the exemplary embodiment, the method 700 includes operating 702 a laser device to drill at least one cooling hole into an outer surface of the component, wherein the laser device emits a number of laser beam pulses during operation. The method 700 also includes detecting 704, by at least one sensor, an air change in air proximate the at least one cooling hole from an air supply system based on data received from the at least one sensor, wherein the air change is indicative of a drilling breakthrough of a back surface of the at least one cooling hole. The method 700 further includes operating 706 the laser device to stop drilling the at least one cooling hole based on the detected air change.

Exemplary systems and methods for the detection of laser drilling breakthrough through a back surface of a cooling hole drilled into an outer surface of a component are described herein. The exemplary systems and methods as described herein provide several advantages over conventional designs and processes, including improved efficiency of cooling hole laser drilling due to sensing of laser drilling breakthrough through a back surface of the cooling hole, improved accuracy and cost-effectiveness of laser drilling breakthrough due to the measurement of air pressure, air flow, and/or air temperature proximate the cooling hole, and improved protection of component features underlying the outer surface of the turbine engine component proximate the cooling hole.

The above description is meant to be exemplary only, and one skilled in the art will recognize that changes may be made to the embodiments described without departing from the scope of the invention disclosed. Modifications, which fall within the scope of the present invention, will be apparent to those skilled in the art, in light of a review of this disclosure, and such modifications are intended to fall within the appended claims. The systems and methods described herein are not limited to the specific embodiments described herein, but rather portions of the various systems may be utilized independently and separately from other systems and methods described herein.

Although specific features of various embodiments of the invention may be shown in some drawings and not in others, this is for convenience only. Moreover, references to "one embodiment" in the above description are not intended to be interpreted as excluding the existence of additional embodiments that also incorporate the recited features. In accordance with the principles of the invention, any feature of a drawing may be referenced and/or claimed in combination with any feature of any other drawing.

Further aspects of the invention are provided by the subject matter of the following clauses:

A detection system for use with a component, the component including a plurality of cooling holes located on an outer surface of the component and an air supply system coupled in flow communication to a back surface of each of the plurality of cooling holes, the detection system comprising: a data acquisition system configured to examine the plurality of cooling holes, the data acquisition system including at least one sensor; and a processor in operable communication with the data acquisition system, the processor being configured to: cause a laser device to drill a first of the cooling holes into the outer surface of the component, wherein the laser device emits a number of laser beam pulses during operation; detect an air change in air proximate the first cooling hole from the air supply system based on data received from the at least one sensor, wherein the air change is indicative of a drilling breakthrough of the back surface of the first cooling hole; and operate the laser device to stop drilling the first cooling hole based on the detected air change.

The detection system according to any of the preceding clauses, wherein the processor is further configured to: determine a threshold number of laser beam pulses to be emitted by the laser device, wherein the threshold number is the number of laser beam pulses emitted to drill through the back surface of the first cooling hole; and operate the laser device to drill at least one subsequent cooling hole into the outer surface of the component based on the threshold number of laser beam pulses.

The detection system according to any of the preceding clauses, wherein the at least one sensor comprises a pressure sensor, and wherein detecting the air change comprises detecting an air pressure change within the first cooling hole proximate the outer surface of the component.

The detection system according to any of the preceding clauses, wherein the at least one sensor comprises a flow sensor, and wherein detecting the air change comprises detecting an air flow instability within the first cooling hole.

The detection system according to any of the preceding clauses, wherein the at least one sensor comprises a temperature sensor, and wherein detecting the air change comprises detecting a temperature change at the outer surface of the component proximate the first cooling hole.

The detection system according to any of the preceding clauses, wherein the temperature sensor comprises one of a thermistor and a thermocouple.

The detection system according to any of the preceding clauses, wherein the temperature change at the outer surface of the component proximate the first cooling hole comprises one of changing relative to an ambient temperature and changing relative to a temperature of the component.

The detection system according to any of the preceding clauses, wherein operating the laser device to drill the at least one subsequent cooling hole comprises selectively operating the laser device at a first laser beam pulse rate and at a second laser beam pulse rate, and wherein the first laser beam pulse rate is greater than the second laser beam pulse rate.

The detection system according to any of the preceding clauses, wherein the laser device is operated at the first laser beam pulse rate for a first number of laser beam pulses and is further operated at the second laser beam pulse rate for a second number of laser beam pulses, and wherein the first number of laser beam pulses and the second number of laser beam pulses are each variably selected based on the determined threshold number.

The detection system according to any of the preceding clauses, wherein operating the laser device to drill the at least one subsequent cooling hole comprises operating the laser device based on at least one of a thickness of the component and a material of the component.

The detection system according to any of the preceding clauses, wherein operating the laser device to drill the at least one subsequent cooling hole comprises operating the laser device based on a pulse power of the laser device.

A method of detecting breakthrough of laser drilling through a back surface of at least one cooling hole located on an outer surface of a component, the component including an air supply system coupled in flow communication to a back surface of the at least one cooling hole, the method comprising: operating a laser device to drill the at least one cooling hole into the outer surface of the component, wherein the laser device emits a number of laser beam pulses during operation; detecting, by at least one sensor, an air change in air proximate the at least one cooling hole from the air supply system based on data received from the at least one sensor, wherein the air change is indicative of a drilling breakthrough of the back surface of the at least one cooling hole; and operating the laser device to stop drilling the at least one cooling hole based on the detected air change.

The method according to any of the preceding clauses, further comprising: determining a threshold number of laser beam pulses to be emitted by the laser device, wherein the threshold number is the number of laser beam pulses emitted to drill through the back surface of the at least one cooling hole; and operating the laser device to drill at least one subsequent cooling hole into the outer surface of the component based on the threshold number of laser beam pulses.

The method according to any of the preceding clauses, wherein detecting by the at least one sensor comprises detecting, by a pressure sensor, an air pressure change within the at least one cooling hole proximate the outer surface of the component.

The method according to any of the preceding clauses, wherein detecting by the at least one sensor comprises detecting, by a flow sensor, an air flow instability within the at least one cooling hole.

The method according to any of the preceding clauses, wherein detecting by the at least one sensor comprises detecting, by a temperature sensor, a temperature change at the outer surface of the component proximate the at least one cooling hole.

The method according to any of the preceding clauses, wherein detecting by the temperature sensor comprises detecting by one of a thermistor and a thermocouple.

The method according to any of the preceding clauses, wherein the temperature change at the outer surface of the component proximate the at least one cooling hole comprises one of changing relative to an ambient temperature and changing relative to a temperature of the component.

The method according to any of the preceding clauses, wherein operating the laser device to drill the at least one subsequent cooling hole comprises selectively operating the laser device at a first laser beam pulse rate and at a second laser beam pulse rate, and wherein the first laser beam pulse rate is greater than the second laser beam pulse rate.

The method according to any of the preceding clauses, wherein the laser device is operated at the first laser beam pulse rate for a first number of laser beam pulses and is further operated at the second laser beam pulse rate for a second number of laser beam pulses, and wherein the first number of laser beam pulses and the second number of laser beam pulses are each variably selected based on the determined threshold number.

While the invention has been described in terms of various specific embodiments, those skilled in the art will recognize that the invention can be practiced with modification within the spirit and scope of the claims.

## Claims

1. A detection system for use with a component, the component including a plurality of cooling holes located on an outer surface of the component and an air supply system coupled in flow communication to a back surface of each of the plurality of cooling holes, the detection system comprising:
a data acquisition system configured to examine the plurality of cooling holes, the data acquisition system including at least one sensor; and
a processor in operable communication with the data acquisition system, the processor being configured to:
cause a laser device to drill a first of the cooling holes into the outer surface of the component, wherein the laser device emits a number of laser beam pulses during operation;
detect an air change in air proximate the first cooling hole from the air supply system based on data received from the at least one sensor, wherein the air change is indicative of a drilling breakthrough of the back surface of the first cooling hole; and
operate the laser device to stop drilling the first cooling hole based on the detected air change.

2. The detection system of claim 1, wherein the processor is further configured to:
determine a threshold number of laser beam pulses to be emitted by the laser device, wherein the threshold number is the number of laser beam pulses emitted to drill through the back surface of the first cooling hole; and
operate the laser device to drill at least one subsequent cooling hole into the outer surface of the component based on the threshold number of laser beam pulses.

3. The detection system of claim 1, wherein the at least one sensor comprises a pressure sensor, and wherein detecting the air change comprises detecting an air pressure change within the first cooling hole proximate the outer surface of the component.

4. The detection system of claim 1, wherein the at least one sensor comprises a flow sensor, and wherein detecting the air change comprises detecting an air flow instability within the first cooling hole.

5. The detection system of claim 1, wherein the at least one sensor comprises a temperature sensor, and wherein detecting the air change comprises detecting a temperature change at the outer surface of the component proximate the first cooling hole.

6. The detection system of claim 5, wherein the temperature sensor comprises one of a thermistor and a thermocouple.

7. The detection system of claim 5, wherein the temperature change at the outer surface of the component proximate the first cooling hole comprises one of changing relative to an ambient temperature and changing relative to a temperature of the component.

8. The detection system of claim 2, wherein operating the laser device to drill the at least one subsequent cooling hole comprises selectively operating the laser device at a first laser beam pulse rate and at a second laser beam pulse rate, and wherein the first laser beam pulse rate is greater than the second laser beam pulse rate.

9. The detection system of claim 8, wherein the laser device is operated at the first laser beam pulse rate for a first number of laser beam pulses and is further operated at the second laser beam pulse rate for a second number of laser beam pulses, and wherein the first number of laser beam pulses and the second number of laser beam pulses are each variably selected based on the determined threshold number.

10. The detection system of claim 2, wherein operating the laser device to drill the at least one subsequent cooling hole comprises operating the laser device based on at least one of a thickness of the component and a material of the component.

11. The detection system of claim 2, wherein operating the laser device to drill the at least one subsequent cooling hole comprises operating the laser device based on a pulse power of the laser device.

12. A method of detecting breakthrough of laser drilling through a back surface of at least one cooling hole located on an outer surface of a component, the component including an air supply system coupled in flow communication to a back surface of the at least one cooling hole, the method comprising:
operating a laser device to drill the at least one cooling hole into the outer surface of the component, wherein the laser device emits a number of laser beam pulses during operation;
detecting, by at least one sensor, an air change in air proximate the at least one cooling hole from the air supply system based on data received from the at least one sensor, wherein the air change is indicative of a drilling breakthrough of the back surface of the at least one cooling hole; and
operating the laser device to stop drilling the at least one cooling hole based on the detected air change.

13. The method of claim 12, further comprising:
determining a threshold number of laser beam pulses to be emitted by the laser device, wherein the threshold number is the number of laser beam pulses emitted to drill through the back surface of the at least one cooling hole; and
operating the laser device to drill at least one subsequent cooling hole into the outer surface of the component based on the threshold number of laser beam pulses.

14. The method of claim 12, wherein detecting by the at least one sensor comprises detecting, by a pressure sensor, an air pressure change within the at least one cooling hole proximate the outer surface of the component.

15. The method of claim 12, wherein detecting by the at least one sensor comprises detecting, by a flow sensor, an air flow instability within the at least one cooling hole.
